# EUROPÄISCHE PATENTANMELDUNG

(11) **EP 4 649 811 A1**
(43) Veröffentlichungstag der Anmeldung: **19.11.2025**
(21) Anmeldenummer: 25167652.4
(22) Anmeldetag: 01.04.2025
(51) Int. Cl.: A01D 41/127

(54) **MAISGEBISS FÜR EINEN FELDHÄCKSLE**

(30) Priorität: 13.05.2024 DE 102024113248; 26.08.2024 DE 102024124312
(71) Anmelder: CLAAS Selbstfahrende Erntemaschinen GmbH, 33428 Harsewinkel (DE)
(72) Erfinder: Neitemeier, Dennis, 59510 Lippetal (DE); Belau, Sven Carsten, 33332 Gütersloh (DE); Bönig Dr., Ingo, 33330 Gütersloh (DE); Brune, Markus, 33428 Harsewinkel (DE); Dirksen, Matthis, Warendorf (DE); Titkemeier, Daniel, Osnabrück (DE); Schulenburg, Robert, 44319 Dortmund (DE)
(74) Vertreter: CLAAS Gruppe

(57) **Zusammenfassung**

Die vorliegende Erfindung betrifft ein Maisgebiss (1) für einen Feldhäcksler zum Ernten von stängelartigem Erntegut mit mehreren in Breitenrichtung (VB) des Maisgebisses (1) nebeneinander angeordneten, jeweils um eine vertikale Achse rotierbaren, umlaufend antreibbaren Mäh- und Einzugseinheiten (2) zum Abtrennen des Ernteguts von einem zu bearbeitenden Feldboden in einer im Wesentlichen horizontalen Richtung und zum Fördern von abgetrennten Erntegutstängeln. Im Bereich von benachbarten Mäh- und Einzugseinheiten (2) ist zwischen denselben jeweils eine Abteilerspitze (3) positioniert, über welche Erntegut den Mäh- und Einzugseinheiten (2) zuführbar ist. Das Maisgebiss (1) ist dadurch gekennzeichnet, dass es zumindest einen Stängeldickesensor (9) umfasst, welcher zwischen zumindest einem Paar benachbarter Mäh- und Einzugseinheiten (2) angeordnet und dazu vorgesehen und eingerichtet ist, eine Dicke eines Erntegutstängels zu ermitteln.

## Beschreibung

Die vorliegende Anmeldung betrifft ein Maisgebiss für einen Feldhäcksler zum Ernten von stängelartigem Erntegut gemäß dem Oberbegriff des unabhängigen Patentanspruchs 1 sowie einen Feldhäcksler mit einem als Maisgebiss ausgebildeten Vorsatzgerät zum Ernten von stängelartigem Erntegut gemäß dem Oberbegriff des unabhängigen Patentanspruchs 13.

Die Erfassung der Dicke von Erntegutstängeln in einem Vorsatzgerät einer selbstfahrenden landwirtschaftlichen Erntemaschine, beispielsweise eines Feldhäckslers, ist eine Möglichkeit die Masse des geernteten und von den Arbeitsaggregaten der Erntemaschine zu verarbeitenden Ernteguts mit guter Präzision abzuschätzen.

Die Erfassung der Dicke von Erntegutstängeln, insbesondere bei Maispflanzen als Erntegut, erfolgt heutzutage üblicherweise bei reihenabhängigen Vorsatzgeräten, wie beispielsweise einer Pflückvorrichtung, und erfolgt über eine berührende Detektion mittels haptischer Sensoren. Solche haptischen Sensoren umfassen mechanische Tastelemente bzw. Tastbügel, welche die Erntegutstängel von zwei Seiten erfassen. Während des Ernteprozesses bewegen sich die abgetrennten Erntegutstängel in Richtung der Tastelemente und dem nachgeordneten Pflückspalt der Pflückvorrichtung und sorgen beim Passieren der Tastelemente bzw. Tastbügel für eine Auslenkung derselben aus einer definierbaren Nulllage, welche sensorisch erfasst wird und eine Ermittlung der Dicke der Erntegutstängel erlaubt.

Eine solche haptische Sensoreinrichtung für ein als Pflückvorrichtung ausgebildetes Vorsatzgerät ist beispielsweise aus der europäischen Patentanmeldung EP 2 782 438 A1 bekannt.

Eine Pflückvorrichtung stellt wie bereits angedeutet ein reihenabhängiges Vorsatzgerät dar, bei welchem die Erntegutreihen, beispielsweise Maisreihen, an definierten Positionen in das Vorsatzgerät einlaufen. Neben den reihenabhängigen Vorsatzgeräten gibt es allerdings auch sogenannte reihenunabhängige Vorsatzgeräte. Ein Maisgebiss stellt ein solches reihenunabhängiges Vorsatzgerät dar und wird üblicherweise als Vorsatzgerät eines Feldhäckslers zum Ernten von Maispflanzen als Erntegut verwendet. Hier laufen die Erntegutreihen bzw. Maisreihen gerade nicht an definierten Positionen in das Maisgebiss ein, sondern verteilt über die Breite des Maisgebisses. Die Verwendung von mechanischen Tastelementen bzw. Tastbügeln, welche die Erntegut- bzw. Maisstängel von zwei Seiten erfassen, ist hier nicht möglich.

Ausgehend von dem vorstehend genannten Stand der Technik ist es demnach die Aufgabe der vorliegenden Erfindung, die beschriebenen Nachteile des Standes der Technik auszuräumen und insbesondere eine Möglichkeit zu schaffen, die Dicke von Erntegutstängeln im Betrieb eines Maisgebisses als reihenunabhängiges Vorsatzgerät zu ermitteln, ohne hierbei nennenswert Einfluss auf den Erntegutstrom zu nehmen.

Diese Aufgabe wird erfindungsgemäß durch die hier offenbarten Ausführungsformen gelöst, die insbesondere durch den Gegenstand der unabhängigen Ansprüche 1 und 13 definiert sind. Die abhängigen Ansprüche 2 bis 12 betreffen weitere Ausführungsformen. Verschiedene Aspekte und Ausführungsformen dieser Aspekte sind auch in der nachstehenden Zusammenfassung und Beschreibung offenbart, die zusätzliche Merkmale und Vorteile bieten.

Demnach betrifft die vorliegende Erfindung ein Maisgebiss für einen Feldhäcksler zum Ernten von stängelartigem Erntegut mit mehreren in Breitenrichtung des Maisgebisses nebeneinander angeordneten, jeweils um eine vertikale Achse rotierbaren, umlaufend antreibbaren Mäh- und Einzugseinheiten zum Abtrennen des Ernteguts von einem zu bearbeitenden Feldboden in einer im Wesentlichen horizontalen Richtung und zum Fördern von abgetrennten Erntegutstängeln. Im Bereich von benachbarten Mäh- und Einzugseinheiten zwischen denselben ist jeweils eine Abteilerspitze positioniert, über welche Erntegut den Mäh- und Einzugseinheiten zuführbar ist. Das Maisgebiss ist dadurch gekennzeichnet, dass es zumindest einen Stängeldickesensor umfasst, welcher zwischen zumindest einem Paar benachbarter Mäh- und Einzugseinheiten angeordnet und dazu vorgesehen und eingerichtet ist, eine Dicke eines Erntegutstängels zu ermitteln.

Die erfindungsgemäße Integration eines Stängeldickesensors in ein Maisgebiss erlaubt die Ermittlung der Dicke von Erntegutstängeln, insbesondere von Maispflanzen, ohne den Erntegutstrom im Maisgebiss bzw. in einem in Strömungsrichtung folgenden Erntegutkanal eines mit dem Maisgebiss gekoppelten Feldhäckslers nachteilig zu beeinflussen. Durch die Anordnung des Stängeldickesensors zwischen einem Paar benachbarter Mäh- und Einzugseinheiten passieren die Erntegutstängel den Stängeldickesensor während sie von den Mäh- und Einzugseinheiten tiefer in das Maisgebiss bzw. hin zum gekoppelten Feldhäcksler gefördert werden. Der Stängeldickesensor kann beim Passieren der Erntegutstängel besonders unkompliziert deren Dicke erfassen, beeinflusst dabei aber nicht den Förderstrom der Erntegutstängel. Die Integration des Stängeldickesensors in den Bereich zwischen einem Paar benachbarter Mäh- und Einzugseinheiten ist weiterhin dahingehend vorteilhaft, dass in diesem Bereich ein gewisser Bauraum zur Verfügung steht. Der Stängeldickesensor kann mit besonders geringem Aufwand funktionssicher in das Maisgebiss integriert werden, ohne dass das Maisgebiss gutstrombeeinflussenden konstruktiven Änderungen unterworfen wird. Ein weiterer Vorteil der erfindungsgemäßen Anordnung des Stängeldickesensors zwischen einem Paar benachbarter Mäh- und Einzugseinheiten kann darin gesehen werden, dass eine Ermittlung der Dicke von Erntegutstängeln sehr früh während des Erntegutverarbeitungsprozesses erfolgt. Sofern die Dicke der Erntegutstängel als Regelgröße für den Betrieb des Maisgebisses oder des Feldhäckslers während eines Ernteprozesses genutzt werden soll, kann durch diese Positionierung des Stängeldickesensors weit vorne im Maisgebiss frühzeitig auf etwaige Bestandsänderungen im Erntegut bzw. Durchsatzänderungen im Erntegutfluss reagiert werden.

Gemäß einer vorteilhaften Weiterbildung der Erfindung ist vorgesehen, dass der Stängeldickesensor einen Tastbügel umfasst, der einen von Erntegutstängeln durchlaufenen Kanal zwischen dem Paar benachbarter Mäh- und Einzugseinheiten auslenkbar begrenzt, wobei eine Auslenkung des Tastbügels durch einen den Kanal durchlaufenden Erntegutstängel repräsentativ für die Dicke des Erntegutstängels ist.

Vorzugsweise ist vorgesehen, dass der Tastbügel um einen Angelpunkt schwenkbar ist, wobei an dem Angelpunkt ein Potentiometer oder Drehwinkelgeber vorgesehen ist.

Die Ausgestaltung des Stängeldickesensors als Tastbügel, welcher in den Kanal tastet, der von den abgetrennten Erntegutstängeln passiert wird, begünstigt eine geringe Beeinflussung des Erntegutstroms im Maisgebiss während der Ermittlung der Dicke der Erntegutstängel. Der Tastbügel kann von den mittels der Mäh- und Einzugseinheit geförderten Erntegutstängeln leicht aus dem Kanal verschwenkt werden, ohne hierbei einen wirklichen Widerstand für den Erntegutstängel in Durchlaufrichtung darzustellen. Die Kopplung von Tastbügel und Potentiometer bzw. Drehwinkelgeber über den Angelpunkt erlaubt sodann eine unmittelbare Ermittlung der Dicke des entsprechenden den Tastbügel verschwenkenden Erntegutstängels.

Gemäß einer vorteilhaften Weiterbildung der Erfindung ist vorgesehen, dass die Mäh- und Einzugseinheiten jeweils eine Transportscheibe zum Fördern der Erntegutstängel umfassen, wobei die Transportscheibe den Kanal auf einer Seite begrenzt.

Vorzugsweise ist vorgesehen, dass die Transportscheibe zumindest ein Zinkenrad umfasst, wobei das Zinkenrad den Kanal auf der einen Seite begrenzt.

Weiter vorzugsweise ist vorgesehen, dass die Transportscheibe jeweils zwei in Richtung der vertikalen Achse der Mäh- und Einzugseinheit voneinander beabstandete Zinkenräder umfasst, wobei der Tastbügel in Richtung der vertikalen Achse zwischen den beiden Zinkenrädern angeordnet ist.

Besonders bevorzugt ist vorgesehen, dass der Tastbügel in Richtung der vertikalen Achse zwischen den beiden Zinkenrädern, diese bereichsweise überlappend, angeordnet ist.

Indem die Transportscheibe bzw. das Zinkenrad den Kanal von der einen Seite begrenzt, wird eine Referenzkante für die Ermittlung der Dicke eines Erntegutstängels geschaffen. Die Erntegutstängel werden, nachdem sie vom Feldboden abgetrennt wurden, von der Transportscheibe bzw. dem Zinkenrad umfänglich in das Maisgebiss zwecks Weiterverarbeitung gefördert. Ein jeweiliger Erntegutstängel liegt somit mit seinem Umfang an der Referenzkante an. Der Tastbügel begrenzt den Kanal von der anderen Seite aus, im nichtausgelenkten Zustand des Tastbügels hat der Tastbügel somit eine fixe Position gegenüber der Referenzkante. Läuft nun ein Erntegutstängel in den Kanal ein und lenkt den Tastbügel aus, entspricht das Ausmaß der Verschwenkung des Tastbügels, also der mittels Potentiometer bzw. Drehwinkelgeber erfasste Drehwinkel, unmittelbar der Dicke des Erntegutstängels.

Gemäß einer vorteilhaften Weiterbildung der Erfindung ist vorgesehen, dass der Tastbügel eine in Bezug auf eine normale Durchlaufrichtung eines Erntegutstängels stromaufwärtige Flanke umfasst, entlang derer der Kanal in der Durchlaufrichtung allmählich enger wird, wobei der Tastbügel entlang eines quer zum Kanal verlaufenden Weges auslenkbar ist.

Gemäß einer vorteilhaften Weiterbildung der Erfindung ist vorgesehen, dass der Tastbügel eine in Bezug auf die normale Durchlaufrichtung eines Erntegutstängels stromabwärtige Flanke umfasst, entlang derer der Kanal in der Durchlaufrichtung allmählich breiter wird, wobei die stromabwärtige Flanke unter einem Winkel zur normalen Durchlaufrichtung verläuft, der klein genug ist, um eine Auslenkung des Tastbügels durch einen entgegen der Durchlaufrichtung passierenden Erntegutstängel zu ermöglichen.

Indem der Erntegutstängel beim Durchlaufen des Kanals bedingt durch die stromaufwärtige Flanke des Tastbügels selbigen auf einem quer zum Kanal orientierten Weg allmählich zurückdrängt, kann ein langsam veränderlicher Wert der Auslenkung erhalten werden, dessen Maximum exakt abgetastet werden kann, um daraus die Dicke des entsprechenden für die Auslenkung verantwortlichen Erntegutstängels abzuleiten bzw. zu ermitteln. Die stromabwärtige Flanke erlaubt es das Maisgebiss, falls nötig, zu reversieren, um bereits aufgenommenes Erntegut bzw. Erntegutstängel wieder auszustoßen, ohne dass Rücksicht auf den Stängeldickesensor genommen werden muss.

Gemäß einer vorteilhaften Weiterbildung der Erfindung ist vorgesehen, dass der Stängeldickesensor zwischen dem Paar benachbarter Mäh- und Einzugseinheiten im Bereich der Abteilerspitze angeordnet ist.

Vorzugsweise ist vorgesehen, dass der Stängeldickesensor an der Abteilerspitze angeordnet ist.

Besonders bevorzugt ist vorgesehen, dass der Stängeldickesensor in die Abteilerspitze integriert ist.

Die Anordnung des Stängeldickesensors im Bereich einer Abteilerspitze zwischen dem Paar benachbarter Mäh- und Einzugseinheiten ist besonders vorteilhaft dahingehend anzusehen, den Erntegutstrom im Maisgebiss nicht nachteilig zu beeinflussen, gleichzeitig möglichst weit vorne im Maisgebiss die Messung durchzuführen und dabei vorhandenen Bauraum im Maisgebiss für die Integration zu nutzen, sodass das Maigebiss keinen konstruktiven Änderungen bedarf, um den Stängeldickesensor zu integrieren.

Gemäß einer vorteilhaften Weiterbildung der Erfindung ist vorgesehen, dass zumindest einige der benachbarten Mäh- und Einzugseinheiten dazu vorgesehen und eingerichtet sind, bei Antrieb in gleichem Drehsinn zu rotieren, wobei der Stängeldickesensor zwischen einem Paar benachbarter und bei Antrieb in gleichem Drehsinn rotierender Mäh- und Einzugseinheiten angeordnet ist.

Bei einem Paar benachbarter und bei Antrieb in gleichem Drehsinn rotierender Mäh- und Einzugseinheiten werden die mittels der entsprechend Mäh- und Einzugseinheiten geförderten Erntegutströme nicht im Kanal zwischen diesen vereint. Vielmehr wird nur der Erntegutstrom einer der beiden Mäh- und Einzugseinheiten in den Kanal zwischen beiden Mäh- und Einzugseinheiten gefördert. Hierdurch kann der Stängeldickesensor, insbesondere der Tastbügel des Stängeldickesensor, lediglich die Erntegutstängel des in den Kanal geförderten Erntegutstroms ermitteln und wird dabei nicht durch einen weiteren Erntegutstrom im Kanal beeinflusst. Das Messergebnis des Stängeldickesensors wird hierdurch verlässlich sichergestellt.

Gemäß einer vorteilhaften Weiterbildung der Erfindung ist vorgesehen, dass das Maisgebiss mehrere Stängeldickesensoren umfasst, welche in Breitenrichtung des Maisgebisses verteilt angeordnet sind, wobei zwischen einem Paar benachbarter Mäh- und Einzugseinheiten immer nur ein Stängeldickesensor vorgesehen ist.

Die Verwendung mehrerer in Breitenrichtung des Maisgebisses verteilt angeordneter Stängeldickesensoren erlaubt eine Ortsauflösung der Messergebnisse, was eine detaillierte Abbildung des Bestands an Erntegut, welches vom Maisgebiss verarbeitet wird bzw. werden muss, erlaubt. Hierdurch kann bei einer etwaigen Nachnutzung der Ergebnisse der Ermittlung der Dicke von Erntegutstängeln eine Anzeige und/oder Steuerung bzw. Einstellung von Arbeitsaggregaten bzw. Funktionen des Maisgebisses 1 und/oder des Feldhäckslers zielgerichteter und effizienter erfolgen.

Die erfindungsgemäße Aufgabe wird ferner durch einen Feldhäcksler gemäß dem unabhängigen Patentanspruch 13 gelöst.

Die Merkmale der auf das Maisgebiss gemäß dem unabhängigen Patentanspruch 1 bezogenen abhängigen Patentansprüche 2 bis 12 sind gleichermaßen auf den erfindungsgemäßen Feldhäcksler gemäß dem unabhängigen Patentanspruch 13 übertragbar.

Die vorliegende Erfindung wird nachstehend anhand der in den Figuren abgebildeten Ausführungsformen näher beschrieben.

Es zeigen:
- FIG. 1:: eine schematische und exemplarische Ansicht eines erfindungsgemäßen Maisgebisses für einen Feldhäcksler;
- FIG. 2:: eine schematische und exemplarische Ansicht eines erfindungsgemäßen Stängeldickesensors für das erfindungsgemäße Maisgebiss;
- FIG. 3:: eine schematische und exemplarische Detailansicht des erfindungsgemäßen Maisgebisses mit dem erfindungsgemäßen Stängeldickesensor;
- FIG. 4: eine schematische und exemplarische Teilschnittansicht des erfindungsgemäßen Maisgebisses mit einer ersten Position eines Tastbügels des erfindungsgemäßen Stängeldickesensors; und
- FIG. 5:: eine schematische und exemplarische Teilschnittansicht des erfindungsgemäßen Maisgebisses mit einer zweiten Position des Tastbügels des erfindungsgemäßen Stängeldickesensors.

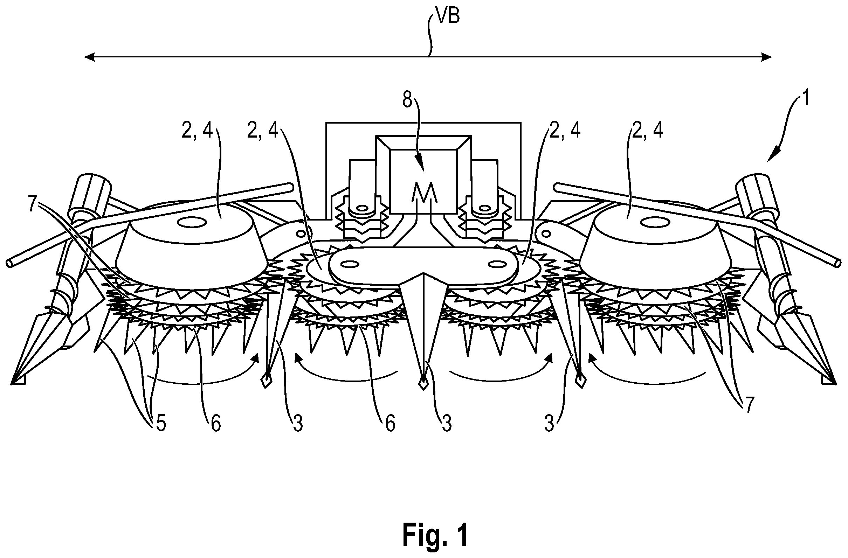

FIG. 1 zeigt in einer schematischen Ansicht von vorn ein als Maisgebiss 1 ausgebildetes Vorsatzgerät für einen - in den FIGs. nicht dargestellten - Feldhäcksler zum Ernten von stängelartigem Erntegut wie z.B. Mais, Miscanthus oder Sorghum.

Das Maisgebiss 1 verfügt über mehrere in horizontaler Richtung bzw. in Breitenrichtung VB des Maisgebisses 1 nebeneinander angeordnete, jeweils um eine - in den FIGs. nicht dargestellte - vertikale Achse rotierbare, umlaufend antreibbare Mäh- und Einzugseinheiten 2. Die umlaufend antreibbaren Mäh- und Einzugseinheiten 2 des Maisgebisses 1 dienen dem Abtrennen des Ernteguts von einem zu bearbeitenden Feldboden in einer im Wesentlichen horizontalen Richtung und zum Fördern von abgetrennten Erntegutstängeln. In FIG. 1 sind vier solcher in Breitenrichtung nebeneinander angeordneter Mäh- und Einzugseinheiten 2 dargestellt. Das Maisgebiss 1 kann jedoch genauso gut sechs, acht oder mehr solcher in Breitenrichtung nebeneinander angeordneter Mäh- und Einzugseinheiten 2 umfassen.

Im Bereich von in horizontaler Richtung bzw. Breitenrichtung VB gesehen unmittelbar nebeneinander positionierten und damit benachbarten Mäh- und Einzugseinheiten 2, auch als ein Paar benachbarter Mäh- und Einzugseinheiten 2 bezeichnet, ist zwischen denselben jeweils eine Abteilerspitze 3 positioniert, über welche Erntegut den Mäh- und Einzugseinheiten 2 zuführbar ist.

Wie in FIG. 1 durch die Pfeile angedeutet, rotieren im Betrieb des Maisgebisses 1, also bei Antrieb, einige der benachbarten Mäh- und Einzugseinheiten 2 mit gleichem Drehsinn, andere benachbarte Mäh- und Einzugseinheiten 2 hingegen mit entgegengerichtetem Drehsinn.

Jede Mäh- und Einzugseinheit 2 umfasst eine drehantreibbare Transportscheibe 4. Nach vorn vorspringende Einweisefinger 5 sind vorgesehen, um jeweils zwischen Reihen von Maispflanzen einzufahren und deren Stängel rotierenden Messern 6 an der Basis der Mäh- und Einzugseinheiten 2 bzw. Transportscheiben 4 zum Abtrennen derselben zuzuführen. Die zwischen Zinken eines Zinkenrades 7 der Transportscheibe 4 aufgenommenen Erntegutstängel werden entlang des Umfangs der Transportscheibe 4 ins Innere des Maisgebisses 1 befördert und dort zu einer mittigen Übergabeöffnung 8 weitertransportiert.

Erfindungsgemäß ist nunmehr vorgesehen, dass das Maisgebiss 1 einen oder mehrere Stängeldickesensoren 9 zum Ermitteln einer Dicke eines Erntegutstängels umfasst. Der Stängeldickesensor 9 ist dabei zwischen einem Paar benachbarter Mäh- und Einzugseinheiten 2 des Maisgebisses 1 angeordnet. Gemäß einer bevorzugten Ausgestaltung ist der Stängeldickesensor 9 zwischen einem Paar benachbarter und bei Antrieb in gleichem Drehsinn rotierender Mäh- und Einzugseinheiten 2 angeordnet.

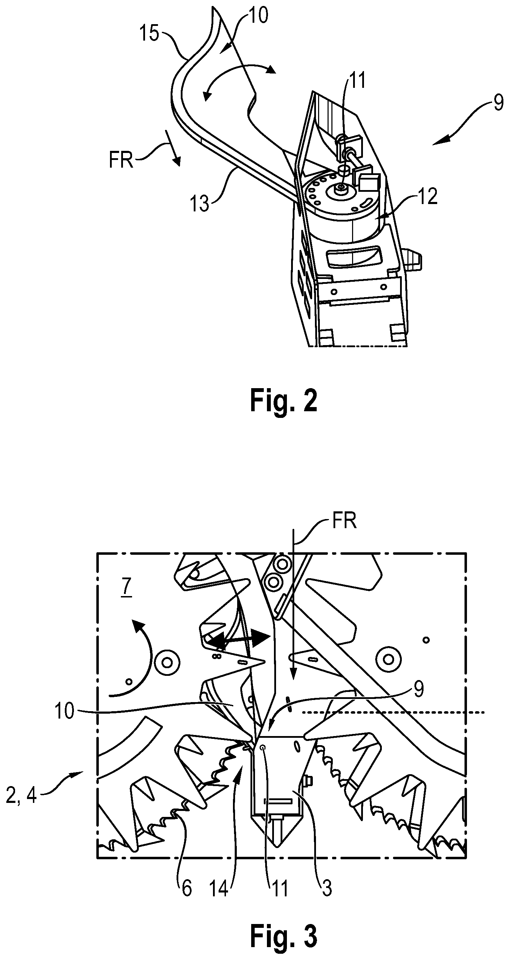

Wie insbesondere in FIG. 2 dargestellt, umfasst der Stängeldickesensor 9 einen Tastbügel 10. Der Tastbügel 10 ist um einen Angelpunkt 11 gegen eine Vorspannkraft schwenkbar, der in einer Fahrtrichtung FR des Feldhäckslers vor einem Berührungspunkt eines Erntegutstängels mit dem Tastbügel 10 liegt, so dass die Bewegung, welche der Tastbügel 10 beim Durchgang eines Erntegutstängels vollführt, eine Bewegung in Wesentlichen quer zur Fahrtrichtung FR des Feldhäckslers ist. Zum Messen einer Auslenkung des Tastbügels 10 kann ein Potentiometer oder Drehwinkelgeber 12 an dem Angelpunkt 11 vorgesehen sein.

Eine stromaufwärtige Flanke 13 des Tastbügels 10, vor dem Berührungspunkt, verläuft schräg zur Fahrtrichtung FR des Feldhäckslers, so dass ein Erntegutstängel, der sich entlang eines Kanals 14 zwischen dem Paar benachbarter Mäh- und Einzugseinheiten 2, welcher von dem Tastbügel 10 auslenkbar begrenzt ist bzw. wird, den Tastbügel 10 leicht beiseite drücken kann. Die Auslenkung des Tastbügels 10 entspricht der bzw. repräsentiert die Dicke des Erntegutstängels und wird über das Potentiometer oder den Drehwinkelgeber 12 bzw. durch Verarbeitung der vom Potentiometer oder Drehwinkelgeber 12 entsprechend bereitgestellten Signale mittels einer - in den FIGs. nicht dargestellten - Recheneinheit ermittelt. Die Recheneinheit kann anschließend die ermittelte Dicke des Erntegutstängels zwecks Anzeige und/oder Steuerung bzw. Einstellung von Arbeitsaggregaten bzw. Funktionen des Maisgebisses 1 und/oder des Feldhäckslers weiterverwenden.

Falls es unter ungünstigen Umständen zu einer Überfüllung des Maisgebisses 1 und einer anschließenden Blockade eines dem Maisgebiss 1 nachgelagerten Aggregats des Feldhäckslers kommen sollte, ist die dann nötige Entlastung des Maisgebisses 1 durch die Form des Tastbügel 10 erleichtert. Hinter dem Berührpunkt weist der Tastbügel 10 eine stromabwärtige Flanke 15 auf, entlang derer der Kanal 14 in der Durchlaufrichtung allmählich breiter wird. Der Winkel, den die stromabwärtige Flanke 15 mit der Durchlaufrichtung bildet, ist kleiner als 45° und insbesondere klein genug um zu gewährleisten, dass ein Erntegutstängel aus dem Kanal 14 herausgeschoben bzw. gefördert werden kann, dabei den Tastbügel 10 beiseite drückt, ohne an diesem festzuklemmen.

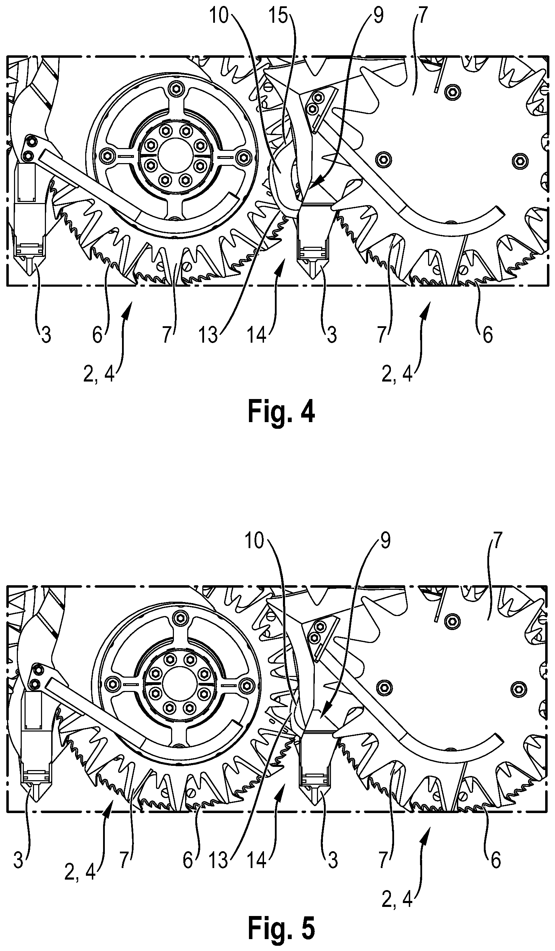

Wie insbesondere in FIG. 3 dargestellt, ist der Stängeldickesensor 9 an einer bzw. in eine Abteilerspitze 3 zwischen dem Paar benachbarter Mäh- und Einzugseinheiten 2 bzw. derer Transportscheiben 26 angeordnet, angebracht bzw. integriert. Der Tastbügel 10 steht unter der Abteilerspitze 3 seitlich in den Kanal 14 vor, der einerseits von der Abteilerspitze 3 bzw. dem Tastbügel 10 selbst und andererseits von einer Transportscheibe 4 bzw. den Zinkenrädern 7 der Transportscheibe 4 einer Mäh- und Einzugseinheit 2 eines Paares benachbarter Mäh- und Einzugseinheiten 2 begrenzt ist. Der Drehsinn der Transportscheibe 4 (hier im Gegenuhrzeigersinn) ist so gewählt, dass die von den Messern 6 der entsprechenden Mäh- und Einzugseinheit 2 bzw. Transportscheibe 4 geschnittenen Erntegutstängel dem Kanal 14 zugeführt und dort von dem Stängeldickesensor 9 erfasst werden. Der Tastbügel 10 ist zur Erfassung der Dicke eines Erntegutstängels hierbei derart angeordnet, dass der Tastbügel 10 in Richtung der vertikalen Achse einer Mäh- und Einzugseinrichtung 2 zwischen zwei Zinkenrädern 7 der Transportscheibe 4 dieser Mäh- und Einzugseinheit 2, besonders bevorzugt diese bereichsweise überlappend, angeordnet ist. Zur Verdeutlichung sei auf die FIGs. 4 und 5 verwiesen, welche jeweils Schnittdarstellungen durch ein Paar benachbarter Mäh- und Einzugseinheiten 2 zeigen, wobei FIG. 4 den Tastbügel 10 in einer nicht ausgelenkten Position, in der somit kein Erntegutstängel den Tastbügel berührt, und FIG. 5 den Tastbügel 10 in einer ausgelenkten Position, in der somit ein - allerdings nicht dargestellter Erntegutstängel - den Tastbügel 10 berührt und entsprechend die Dicke des Erntegutstängels bestimmt wird, zeigt. Der Tastbügel 10 wird, wie in den FIGs. 4 und 5 zu sehen, durch den Erntegutstängel derart quer zur Durchlaufrichtung verschwenkt, dass dieser in den Bereich/Kanal zwischen der Abteilerspitze 3 und der anderen Transportscheibe 4 eintaucht. Da die beiden Transportscheiben 4 gleichsinnig rotieren, werden im Bereich/Kanal zwischen der Abteilerspitze 3 und der anderen Transportscheibe 4 keine Erntegutstängel in das Maisgebiss 1 gefördert, wodurch der Tastbügel 10 sich unbehindert bzw. ohne Widerstand frei in diesen Bereich/Kanal zwecks Ermittlung der Dicke des Erntegutstängels im Kanal 14 bewegen kann.

Das Maisgebiss 1 kann nicht nur einen zuvor beschriebenen Stängeldickesensor 9 umfassen, sondern gleich mehrere solcher Stängeldickesensoren 9. Sofern das Maisgebiss 1 mehrere Stängeldickesensoren 9 umfasst, sind diese in Breitenrichtung VB des Maisgebisses 1 verteilt angeordnet. Wesentlich ist hierbei, dass zwischen einem Paar benachbarter Mäh- und Einzugseinheiten 2 allerdings immer nur ein Stängeldickesensor 9 vorgesehen bzw. angeordnet ist.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

- 1: Maisgebiss
- 2: Mäh- und Einzugseinheit
- 3: Abteilerspitze
- 4: Transportscheibe
- 5: Einweisefinger
- 6: Messer
- 7: Zinkenrad
- 8: Übergabeöffnung
- 9: Stängeldickesensor
- 10: Tastbügel
- 11: Angelpunkt
- 12: Potentiometer oder Drehwinkelgeber
- 13: Stromaufwärtige Flanke
- 14: Kanal
- 15: Stromabwärtige Flanke

- VB: Breitenrichtung des Maisgebisses
- FR: Fahrtrichtung eines Feldhäckslers

## Patentansprüche

1. Maisgebiss (1) für einen Feldhäcksler zum Ernten von stängelartigem Erntegut mit mehreren in Breitenrichtung (VB) des Maisgebisses (1) nebeneinander angeordneten, jeweils um eine vertikale Achse rotierbaren, umlaufend antreibbaren Mäh- und Einzugseinheiten (2) zum Abtrennen des Ernteguts von einem zu bearbeitenden Feldboden in einer im Wesentlichen horizontalen Richtung und zum Fördern von abgetrennten Erntegutstängeln, wobei im Bereich von benachbarten Mäh- und Einzugseinheiten (2) zwischen denselben jeweils eine Abteilerspitze (3) positioniert ist, über welche Erntegut den Mäh- und Einzugseinheiten (2) zuführbar ist, **dadurch gekennzeichnet, dass** das Maisgebiss (1) zumindest einen Stängeldickesensor (9) umfasst, welcher zwischen zumindest einem Paar benachbarter Mäh- und Einzugseinheiten (2) angeordnet und dazu vorgesehen und eingerichtet ist, eine Dicke eines Erntegutstängels zu ermitteln.

2. Maisgebiss (1) nach Anspruch 1, **dadurch gekennzeichnet, dass** der Stängeldickesensor (9) einen Tastbügel (10) umfasst, der einen von Erntegutstängeln durchlaufenen Kanal (14) zwischen dem Paar benachbarter Mäh- und Einzugseinheiten (2) auslenkbar begrenzt, wobei eine Auslenkung des Tastbügels (10) durch einen den Kanal (14) durchlaufenden Erntegutstängel repräsentativ für die Dicke des Erntegutstängels ist.

3. Maisgebiss (1) nach Anspruch 2, **dadurch gekennzeichnet, dass** der Tastbügel (10) um einen Angelpunkt (11) schwenkbar ist, wobei an dem Angelpunkt (11) ein Potentiometer oder Drehwinkelgeber (12) vorgesehen ist.

4. Maisgebiss (1) nach Anspruch 2 oder 3, **dadurch gekennzeichnet, dass** die Mäh- und Einzugseinheiten (2) jeweils eine Transportscheibe (4) zum Fördern der Erntegutstängel umfassen, wobei die Transportscheibe (4) den Kanal (14) auf einer Seite begrenzt.

5. Maisgebiss (1) nach Anspruch 4, **dadurch gekennzeichnet, dass** die Transportscheibe (4) zumindest ein Zinkenrad (7) umfasst, wobei das Zinkenrad (7) den Kanal (14) auf der einen Seite begrenzt.

6. Maisgebiss (1) nach Anspruch 5, **dadurch gekennzeichnet, dass** die Transportscheibe (4) jeweils zwei in Richtung der vertikalen Achse der Mäh- und Einzugseinheit (2) voneinander beabstandete Zinkenräder (7) umfasst, wobei der Tastbügel (10) in Richtung der vertikalen Achse zwischen den beiden Zinkenrädern (7), vorzugsweise diese bereichsweise überlappend, angeordnet ist.

7. Maisgebiss (1) nach einem der Ansprüche 2 bis 6, **dadurch gekennzeichnet, dass** der Tastbügel (10) eine in Bezug auf eine normale Durchlaufrichtung eines Erntegutstängels stromaufwärtige Flanke (13) umfasst, entlang derer der Kanal (14) in der Durchlaufrichtung allmählich enger wird, wobei der Tastbügel (10) entlang eines quer zum Kanal (14) verlaufenden Weges auslenkbar ist.

8. Maisgebiss (1) nach Anspruch 7, **dadurch gekennzeichnet, dass** der Tastbügel (10) eine in Bezug auf die normale Durchlaufrichtung eines Erntegutstängels stromabwärtige Flanke (15) umfasst, entlang derer der Kanal (14) in der Durchlaufrichtung allmählich breiter wird, wobei die stromabwärtige Flanke (15) unter einem Winkel zur normalen Durchlaufrichtung verläuft, der klein genug ist, um eine Auslenkung des Tastbügels (10) durch einen entgegen der Durchlaufrichtung passierenden Erntegutstängel zu ermöglichen.

9. Maisgebiss (1) nach einem der Ansprüche 1 bis 8, **dadurch gekennzeichnet, dass** der Stängeldickesensor (9) zwischen dem Paar benachbarter Mäh- und Einzugseinheiten (2) im Bereich der Abteilerspitze (3) angeordnet ist.

10. Maisgebiss (1) nach Anspruch 9, **dadurch gekennzeichnet, dass** der Stängeldickesensor (9) an der Abteilerspitze (3) angeordnet, vorzugsweise in die Abteilerspitze (3) integriert, ist.

11. Maisgebiss (1) nach einem der Ansprüche 1 bis 10, **dadurch gekennzeichnet, dass** zumindest einige der benachbarten Mäh- und Einzugseinheiten (2) dazu vorgesehen und eingerichtet sind, bei Antrieb in gleichem Drehsinn zu rotieren, wobei der Stängeldickesensor (9) zwischen einem Paar benachbarter und bei Antrieb in gleichem Drehsinn rotierender Mäh- und Einzugseinheiten (2) angeordnet ist.

12. Maisgebiss (1) nach einem der Ansprüche 1 bis 11, **dadurch gekennzeichnet, dass** das Maisgebiss (1) mehrere Stängeldickesensoren (9) umfasst, welche in Breitenrichtung (VB) des Maisgebisses (1) verteilt angeordnet sind, wobei zwischen einem Paar benachbarter Mäh- und Einzugseinheiten (2) immer nur ein Stängeldickesensor (9) vorgesehen ist.

13. Feldhäcksler mit einem als Maisgebiss (1) ausgebildeten Vorsatzgerät zum Ernten von stängelartigem Erntegut, **dadurch gekennzeichnet, dass** das Maisgebiss (1) nach einem der Ansprüche 1 bis 12 ausgebildet ist.
